(19) Europäisches Patentamt
European Patent Office
Office européen des brevets

(11) **EP 2 860 797 A1**

(12) **EUROPEAN PATENT APPLICATION**

(43) Date of publication:
**15.04.2015 Bulletin 2015/16**

(51) Int Cl.:
*H01M 4/131* (2010.01)     *H01M 10/04* (2006.01)
*H01M 10/0525* (2010.01)     *H01M 10/0567* (2010.01)
*H01M 10/42* (2006.01)     *H01M 4/02* (2006.01)
*H01M 10/44* (2006.01)

(21) Application number: **14188144.1**

(22) Date of filing: **08.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.10.2013   JP 2013214218**

(71) Applicant: **Automotive Energy Supply
Corporation
Zama-shi, Kanagawa 252-0012 (JP)**

(72) Inventor: **Nakagawa, Takashi
Zama-shi, Kanagawa 252-0012 (JP)**

(74) Representative: **Hoefer & Partner
Pilgersheimer Straße 20
81543 München (DE)**

(54) **Nonaqueous electrolyte secondary battery**

(57)     A battery subjected to a charging/discharging including at least initial charging is configured such that a power generating element constituting a laminated positive electrode and negative electrode separated by a separator is stored within a covering along with a nonaqueous electrolyte and an additive, the covering is sealed with a terminal leading out of the covering, and a relational expression $R_E < R_C < R_A$ is defined by using a total amount of presence $W_E$ of the additive component in the electrolyte, $W_C$ of the additive component in the positive electrode, and $W_A$ of the additive component in the negative electrode after charging/discharging as $W_T$, and by using an abundance ratio of $W_E$ with respect to the total amount of $W_T$, $W_C$ with respect to the total amount of $W_T$, and $W_A$ with respect to the total amount of $W_T$ as $R_E$, $R_C$, and $R_A$.

**FIG. 2**

Description

**TECHNICAL FIELD**

The present description relates to a nonaqueous electrolyte secondary battery that stores a power generating element, an electrolyte, and an electrolyte additive inside an covering of a laminate film or the like.

**BACKGROUND ART**

It is known that a nonaqueous electrolyte secondary battery such as a lithium ion secondary battery (hereinafter referred to as a "battery") is configured such that a power generating element formed by laminating one or more positive electrodes that use a lithium complex oxide or the like as an active material, one or more negative electrodes that use a carbon material or the like (*e.g.,* graphite) as an active material, and one or more separators is stored together with an electrolyte containing a lithium salt or the like (*e.g.,* nonaqueous electrolyte that is dissolved using a lithium salt or the like) in a covering of a laminate film or the like (laminate film, in which a synthetic resin is laminated on a surface of a metallic layer).

While charging/discharging such as initial charging is performed in a method of manufacturing the battery, the generation of a reactant gas or the like occurs as a result of a strong reducing power of the negative electrode (electrochemical reaction that reductively decomposes the electrolyte), and the generation of the reactant gas or the like may have an affect on a property of the battery (*e.g.,* an electrical property and a battery life property).

A method is employed, in which a coating derived from an additive is formed on a negative electrode surface (formation such that a surface of a negative electrode material layer is covered) by performing charging/discharging of the battery after adding an electrolyte additive (hereinafter referred to as "additive") to the electrolyte, so that reductive decomposition of the electrolyte is inhibited.

As a specific example, *Patent Literature 1* discloses technology that focuses on setting an additive amount of a sultone compound or the like contained in a solvent component of the electrolyte within a predetermined range (0.05 to 8 wt%), and improving a discharge capacity. *Patent Literature 2* discloses technology that focuses on reducing an additive amount by regulating a presence of an additive component in the electrolyte after charging/discharging so as not to exceed a predetermined value (regulation such that a sulfur concentration is less than 0.05 wt%), and inhibiting a reduction in the discharge capacity.

**SUMMARY OF INVENTION**

Technical Problem

A coating amount of a coating that is formed on a negative electrode surface in a battery having an additive amount reduced by regulating a presence of an additive component in an electrolyte alone may be insufficient.

Based on the above technical problems, the present description provides a nonaqueous electrolyte secondary battery that attempts to sufficiently form a coating on the negative electrode surface and improve a property of the battery by defining a correlation between an abundance ratio of an additive component present in the electrolyte, an abundance ratio of an additive component present in a positive electrode, and an abundance ratio of an additive component present in a negative electrode after charging/discharging.

Solution to Problem

The present description solves the above problem. Specifically, the present description describes a battery subjected to a charging/discharging including at least initial charging configured such that a power generating element formed by laminating a positive electrode and a negative electrode separated by a separator is stored within a covering together with a nonaqueous electrolyte and an additive, and the covering is sealed with a terminal leading out of the covering. Moreover, the present description describes that a relational expression $R_E < R_C < R_A$ is defined by using a total amount of $W_E$ in the additive component present in the electrolyte, $W_C$ in the additive component present in the positive electrode, and $W_A$ in the additive component present in the negative electrode after charging/discharging as $W_T$, and by using an abundance ratio of $W_E$ with respect to the total amount of $W_T$ as $R_E$, an abundance ratio of $W_C$ with respect to the total amount of $W_T$ as $R_C$, and an abundance ratio of $W_A$ with respect to the total amount of $W_T$ as $R_A$.

Advantageous Effects of Invention

According to a battery of the present description, a coating is sufficiently formed on a negative electrode surface, and the sufficient formation of the coating on the negative electrode surface may contribute to an improvement in a battery property.

**BRIEF DESCRIPTION OF DRAWINGS**

FIG. 1 shows a schematic perspective view according to one embodiment of a battery of a present description;

FIG. 2 shows a schematic perspective view of a battery **1** of FIG. 1;

FIG. 3 shows a variation property diagram of $W_E$ in an additive component present in an electrolyte, $W_C$ in an additive component present in a positive electrode, and $W_A$ in an additive component present in a negative electrode with respect to an additive amount **Q** of battery **1**;

FIG. 4 shows a discharging capacity maintenance factor property diagram with respect to an additive amount **Q** according to a high temperature cycle test of battery **1**; and

FIG. 5 shows a discharging capacity maintenance factor property diagram with respect to an additive amount **Q** according to a high temperature storage test of battery **1**.

**DESCRIPTION OF EMBODIMENTS**

Configuration of battery

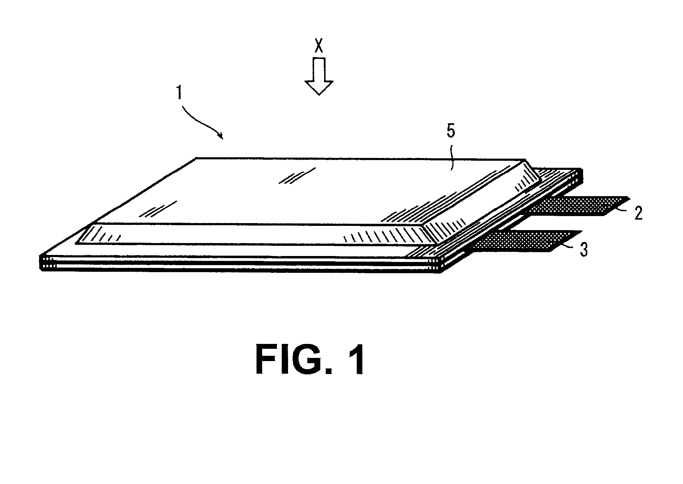

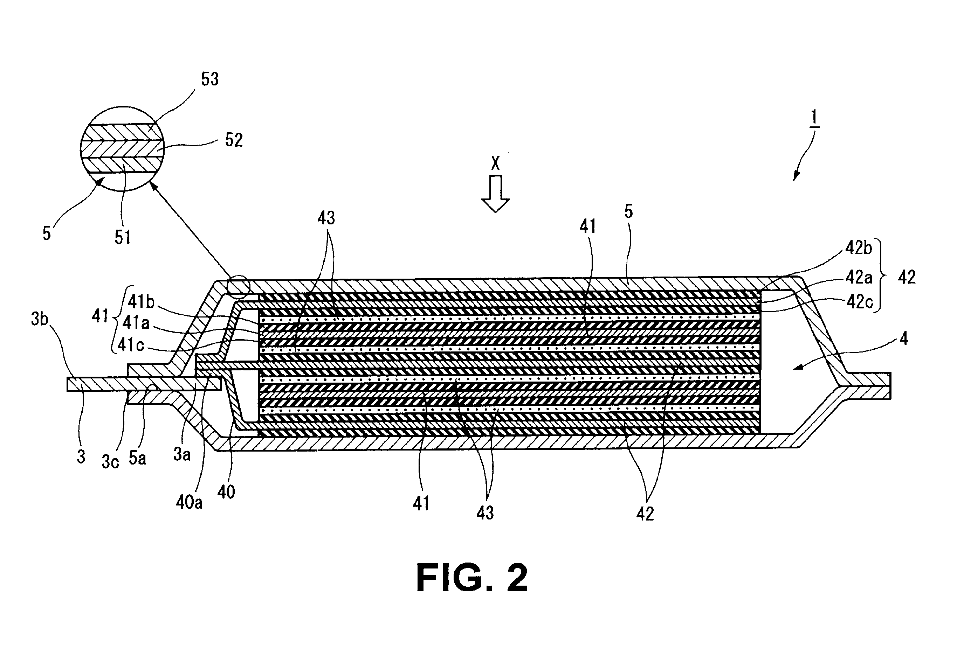

An embodiment of the present description will be explained hereinafter. A battery of the present embodiment may be exemplified by a film-covered-type nonaqueous secondary battery **1** (hereinafter referred to as a "battery") of FIG. 1 and FIG. 2. The battery **1** is, *e.g.,* a lithium ion battery. The battery has a flat rectangular outer shape, and includes a pair of terminals **2** and **3** on one edge in a lengthwise direction.

As seen in FIG. 2, the battery **1** is configured to store a power generating element **4** constituting a rectangular shape (as seen from a direction of an arrow X) and an electrolyte (not shown) inside a covering **5** composed of a laminate film. The power generating element **4** includes alternately laminated rectangular plate-shaped positive electrodes **41** and negative electrodes **42** that are separated by separator **43,** *e.g.,* three negative electrodes **42,** two positive electrodes **41,** and four separators **43** therebetween. Because an accurate measurement of each portion in FIG. 2 is not required, a measurement of each portion has been enlarged for better understanding of the present description.

The positive electrode **41** is formed of a porous positive electrode active material layer **41b, 41c** disposed on both surfaces of a rectangular-shaped positive electrode current collector **41a,** as seen from a direction of an arrow X in FIG.* 1 and FIG. 2. The positive electrode current collector **41a** is composed of an electrochemically stable metal foil, *e.g.,* an aluminum foil, an aluminum alloy foil, a copper foil, or a nickel foil. In addition, the positive electrode active material layer **41b, 41c** including: a positive electrode active material particle of one lithium complex oxide such as lithium nickel oxide ($LiNiO_2$), lithium manganese oxide ($LiMnO_2$), or lithium cobalt oxide ($LiCoO_2$), or a positive electrode active material particle of a compound of two or more lithium complex oxides, and a binder adhered to the particle, is configured such that a conducting agent is added as appropriate, and a vacant space is formed between each particle. Acetylene black, furnace black, carbon black, or the like are preferable as the conducting agent.

The negative electrode **42** is formed of a porous negative electrode active material layer **42b, 42c** disposed on both surfaces of a rectangular-shaped negative electrode current collector **42a,** as seen from a direction of an arrow X in FIG. 1 and FIG. 2. The negative electrode current collector **42a** is composed of an electrochemically stabilized metal foil, *e.g.,* a copper foil, a stainless steel foil, or an iron foil. The negative electrode active material layer **42b, 42c** including: a carbon-type negative electrode active material particle intercalating or emitting a lithium ion such as an amorphous carbon, a non-graphitizable carbon, a graphitizable carbon, or a graphite, and a binder adhered to the particle, is configured such that a conducting agent is added, and an vacant space is formed between each particle.

A portion of an edge of the lengthwise direction of the negative electrode current collector **42a** extends as an extension **40** that lacks the negative electrode active material layer **42b, 42c,** and an end **40a** of the extension **40** is fixed to one end **3a** of an inside of the covering **5.** In a case where there are plurality of negative electrode current collectors **42a,** the ends **40a** of each extension **40** of the plurality of negative collectors **42a** are integrated together by a method such ultrasonic welding.

Similarly, one portion of the lengthwise direction of the positive electrode current collector **41a** not shown in FIG. 2 extends as an extension that lacks the positive electrode active material layer **41b, 41c** (corresponding to extension 40; not shown in FIG. 2), and an end of the extension is fixed to one end of the inside of the covering **5** at a positive electrode terminal **2.**

The separator **43** functions to prevent a short circuit between the positive electrode **41** and the negative electrode **42,** while simultaneously storing electrolytes. The separator **43** is composed of a microporous membrane formed of a polyolefin or the like, *e.g.,* polyethylene (PE) or polypropylene (PP). The monolayered membrane of polyolefin or the like is not particularly limited as the separator **43.** Accordingly, a three-layered configuration sandwiching a polypropylene membrane between two polyethylene membranes or a layered configuration of a polyolefin microporous membrane and a laminate to which an inorganic insulating particle is binded may be employed.

The covering **5** configured to store the power generating element **4** that constitutes a layered configuration of the electrode and the separator, along with the electrolyte or the additive therein, is composed of a laminate film having a three-layered configuration including: a thermal bonding layer **51,** a metallic layer **52,** and a protective layer **53,** such as that indicated in an enlarged portion of FIG. 2. The intermediary metallic layer **52** may be formed of an aluminum foil or the like, the thermal bonding layer **51** that covers the inner surface of the covering may be formed of a synthetic resin that allows thermal bonding, *e.g.,* polypropylene (PP), and the protective layer **53** that covers the outer surface of the metallic layer **52** may be formed of a synthetic resin having superior durability, *e.g.,* polyethylene terephthalate (PET). A laminate film having a plurality of layers may also be employed. Moreover, while the synthetic resin layer is laminated on both sides of the metallic layer **52** in the abovementioned example, the synthetic resin layer on the outer side of the metallic layer **52** is considered optional. Accordingly, a configuration including only the synthetic resin layer on the inner surface is also possible.

In one example, the covering **5** forms a configuration constituting one laminate film disposed on a lower surface side of the power generating element **4** and another laminate film disposed on an upper surface side of FIG. 2, the four peripheral edges of these two laminate films are superimposed, and these edges are thermally bonded to each other. Illustrative embodiments show the covering **5** comprising a two-layered-laminate. Moreover, in another example, the covering **5** is composed of one comparatively large laminate film, three peripheral edges of the covering **5** are superimposed above a double-folded power generating element **4** disposed therewithin, and the three peripheral edges are thermally bonded to each other.

A terminal **2** and a terminal **3** disposed on a shorter edge of a rectangular-shaped battery **1** are each fixed to the extensions of the current collector **41a** and the current collector **42a** on one end (in the current collector **42a,** one end is the "extension **40"**) of the inner side of the covering **5** during thermal bonding of the laminate film of the covering **5,** and another end (in the negative electrode terminal **3,** another end is "another end **3b"**) of the outer side of the covering **5** passes through a fixing surface **5a** of the laminate film so as to protrude from the exterior. In addition, the terminal **2** and the terminal **3** are sandwiched between one end and another end (in the negative electrode terminal **3,** the part is "between one end **3a** and another end **3b"**) by the fixing surface **5a** of the laminate film of the covering **5,** and sealed in a sandwiching portion **3c** sandwiched therewith.

Electrolyte

The electrolyte of battery **1,** as shown in FIG. 1 and FIG. 2, is not particularly limited. For example, a nonaqueous electrolyte may be used that contains a lithium salt such as $LiPF_6$ or $LiBF_4$ dissolved in an organic solvent such as ethylene carbonate, propylene carbonate, diethyl carbonate, dimethyl carbonate, ethylmethyl carbonate, or $\gamma$-butyrolactone as the electrolyte typically employed in a lithium ion secondary battery. Moreover, the above electrolyte is not particularly limited to a liquid solution. For example, a semi-solid electrolyte such as a gel electrolyte may also be employed.

An amount of the electrolyte is not particularly limited. An amount of the electrolyte may be set to be 1.2 to 1.5 times a total value of a hole volume of the electrode **41,** the electrode **42** and the separator **43** (a hole volume of the power generating element **4**), as a specific example that exceeds 1.0 times the above value.

Additive

The additive is reductively decomposed by the negative electrode active material to form the coating on the surface (an active surface) (*see,* negative electrode active material **42b** in FIG. 1 and FIG. 2) during charging/discharging that at least includes initial charging. Thus, so long as an amount of presence $W_E$ in an additive component included in the electrolyte, an amount of presence $W_C$ in an additive component included in the positive electrode **41,** and an amount of presence $W_A$ in an additive component included in the negative electrode **42** is observable by decomposing battery **1** after charging/discharging, various modifications may be applied thereto.

Specifically, a sulfone compound, sulfur-containing compound such as a sulfonic ester may be exemplified. The sulfur containing compound may be employed alone or in combinations of one or more. A rigid protective coating may be formed on the negative electrode surface by using the sulfur compound, and therefore a cycle characteristic may be improved. In a case where using the sulfur containing compound as the additive, a method of quantitative analyzing sulfur such as that mentioned hereinafter is preferably employed during observation of $W_E$, $W_C$, and $W_A$.

Sulfone compound containing a saturated hydrocarbon group such as dimethyl sulfone, diethyl sulfone, or ethylmethyl sulfone; a sulfone compound containing an unsaturated hydrocarbon group such as divinyl sulfone, methyl vinyl sulfone, ethyl vinyl sulfone, diphenyl sulfone, or phenyl vinyl sulfone; or a cyclic sulfone such as sulfolane may be exemplified as the sulfone compound.

A sulfonic ester containing an straight-chained saturated hydrocarbon group such as methyl methane sulfonate or methyl ethane sulfonate; a sulfonic ester containing an straight-chained unsaturated hydrocarbon group such as methyl vinyl sulfonate or ethyl vinyl sulfonate; an aromatic sulfonic ester such as methyl benzene sulfonate, or ethyl benzene sulfonate; a cyclic sulfonic ester containing a saturated hydrocarbon group such as ethane sultone, propane sultone, butane sultone, or 1,5-pentane sultone; or a cyclic sulfonic ester containing an unsaturated hydrocarbon group such as ethylene sultone, 3-hydroxy-1-propene sulfonic acid-$\gamma$-sultone, 4-hydroxy-1-butylene sulfonic acid-$\gamma$-sultone, or 5-hydroxy-1-pentene sulfonic acid-$\gamma$-sultone may be exemplified as the sulfonic acid ester.

With respect to an amount of additive (hereinafter referred to as an "additive amount"), a relational expression **R** cannot be established in cases where the additive amount is deficient or excessive as described hereinafter. The coating may be formed in a proper coating amount on the negative electrode **42** (surface of negative electrode active material layer **42b, 42c**), while simultaneously inhibiting $W_E$ presence in the additive component included in the electrolyte or $W_C$ presence in the additive component included in the positive electrode **41** (surface of positive electrode active material layer **41b, 41c**), by setting the additive amount so as to satisfy the relational expression **R.**

Manufacturing method and charging/discharging

First, an example of a method of manufacturing the battery **1** includes forming the power generating element **4** by sequentially laminating the negative electrode **42**, the separator **43,** and the positive electrode **41,** and attaching an inner end (one end **3a**) of the negative electrode terminal 3 that is initially thermally bonded to the extension **40** of the negative electrode current collector **42a** of the negative electrode **42** by a resin layer **33**. Likewise, the inner end of the initially thermally bonded positive electrode terminal **2** (corresponding to one end **3a** of the negative terminal **3**) is fixed to the extension **40** of the positive electrode collector **41a** of the positive electrode **41** by the resin layer **33**. Then, while the power generating element **4** is covered by the laminate film that forms the covering **5,** the three peripheral edges (in a case where folded in two, two edges are thermally bonded) are thermally bonded such that one edge remains unbonded. Next, the electrolyte that at least includes a combination of one or more additives is injected through the one remaining edge that has not been thermally bonded into the covering **5,** the pressure inside the covering **5** is reduced, and the covering **5** is tightly sealed by thermally bonding the one edge that employed an injection liquid. As a result, a configuration of the battery **1** is completed.

Afterwards, the coating derived from the additive is formed by adhering the reductively decomposed additive in the electrolyte to an active material particle surface in negative electrode active material layer **42b, 42c** by applying voltage through the terminal **2** and the terminal **3** under a predetermined condition and charging/discharging that at least includes an initial charge. On the positive electrode side, the coating derived from the additive is formed by adhering the additive in the electrolyte to an active material particle surface in positive electrode active material layer **42b, 42c** that results from an adsorption phenomenon or the like.

Observing an amount of presence $W_E$, $W_C$, and $W_A$

The amount of presence $W_E$ in an additive component included in the electrolyte, the amount of presence $W_C$ in an additive component included in the positive electrode **41,** the amount of presence $W_C$ in an additive component included in the negative electrode **42** of the battery **1** after charging/discharging may be observable by a method indicated hereinafter.

First, the battery **1** was disassembled after charging/discharging, the electrolyte was extracted by using a centrifuge, and an electrolyte sample $M_E$ was obtained. In addition, the positive electrode **41** and the negative electrode **42** were disassembled from the battery **1,** and a positive electrode sample $M_C$ and a negative electrode sample $M_A$ were obtained.

The amount of presence $W_E$ in the additive component included in the electrolyte sample may be calculated by sampling a portion from the electrolyte sample $M_E$, obtaining a measured solution by dilution with an organic solvent, determining a concentration of a sulfur contained in the above collected sample after being quantified by inductively coupled plasma atomic emission spectrophotometry of a specific component (*e.g.,* sulfur (S)) of an additive within the measured solution, and multiplying by the electrolyte amount present in the battery.

The amount of presence $W_C$ in the additive component included in the positive electrolyte sample $M_C$ and the amount of presence $W_A$ in the additive component included in the negative electrolyte sample $M_A$ can be calculated by sampling a portion from the positive electrolyte sample $M_C$ and sampling a portion from the negative electrolyte sample $M_A$, burning the portion sampled from the positive electrolyte sample $M_C$ and the portion sampled from the negative electrolyte sample $M_A$, collecting a gas generated by burning of the sample partially collected from the positive electrolyte sample $M_C$ and collecting a gas generated by burning of the sample partially collected from the negative electrolyte sample $M_A$ using an absorbing solution, determining a concentration of sulfur contained in the collected positive electrolyte sample $M_C$ after being quantified by inductively coupled plasma atomic emission spectrophotometry for a specific component (*e.g.,* sulfur (S)) of an additive and determining a concentration of sulfur contained in the collected negative electrolyte sample $M_A$ after being quantified by inductively coupled plasma atomic emission spectrophotometry for a specific component (*e.g.,* sulfur (S)) of an additive, and multiplying by a weight of the positive electrolyte sample $M_C$ and the negative electrolyte sample $M_A$ present in the battery.

A method of observing a specific sulfur component of an additive by inductively coupled plasma atomic emission spectrophotometry or ion chromatography as described above is thought to allow for the amount of presence $W_E$ in an additive component included in the total electrolyte, the amount of presence $W_C$ in the additive component included in the total positive electrode layer, and the amount of presence $W_A$ in the additive component included in the total negative electrode layer to be more accurately observed when compared to X-ray photoelectron spectroscopy that only observes part of an object (surface only).

Observation and calculation of average specific surface area of positive electrode and negative electrode

An average active material specific surface area $Sc_{AVE}$ of the positive electrode active material layer is indicated hereinafter with respect to a specific surface area $Sc_n$ ($Sc_1$, $Sc_2$, $Sc_3$, ......, $Sc_{n-1}$, $Sc_n$) (unit: $m^2/g$) of each material of n-type active material particles and a weight ratio $Pc_n$ thereof ($Pc_1$, $Pc_2$, $Pc_3$, ......, $Pc_{n-1}$, $Pc_n$) (total = 1).

$$\mathbf{Sc_{AVE}} = (Sc_1 \times Pc_1) + (Sc_2 \times Pc_2) + (Sc_3 \times Pc_3) + \ldots\ldots + (Sc_{n-1} \times Pc_{n-1}) + (Sc_n \times Pc_n)$$
$$(\text{unit: } m^2/g).$$

Likewise, an average active material specific surface area $Sa_{AVE}$ of the negative electrode active material layer with respect to $Sa_n$ and $Pc_n$ is as:

$$\mathbf{Sa_{AVE}} = (Sa_1 \times Pa_1) + (Sa_2 \times Pa_2) + (Sa_3 \times Pa_3) + \ldots\ldots + (Sa_{n-1} \times Pa_{n-1}) + (Sa_n \times Pa_n)$$
$$(\text{unit: } m^2/g).$$

On the other hand, in a case where a weight of each material of the n-type active material particles contained in the positive electrode active material layer (hereinafter referred to as a "positive electrode active material layer per unit area") on the positive electrode current collector formed per unit area is $Mc_n$ (unit: $g/m^2$), a total surface area of a total active material particle forming micropores in the positive electrode active material layer per unit area $Ac$ can be calculated as indicated hereinafter.

$$\mathbf{Ac} = (Sc_1 \times Mc_1) + (Sc_2 \times Mc_2) + (Sc_3 \times Mc_3) + \ldots\ldots + (Sc_{n-1} \times Mc_{n-1}) + (Sc_n \times Mc_n)$$
$$(\text{unit: } m^2/m^2).$$

Likewise, with respect to the negative electrode:

$$\mathbf{Aa} = (Sa_1 \times Ma_1) + (Sa_2 \times Ma_2) + (Sa_3 \times Ma_3) + \ldots\ldots + (Sa_{n-1} \times Ma_{n-1}) + (Sa_n \times Ma_n)$$
$$(\text{unit: } m^2/m^2).$$

**Ac/Aa** that reflects the above ratio indicates the ratio of the positive electrode and the negative electrode of the surface area of micropores formed by the active material particle (hereinafter, also referred to as an "active material surface area ratio").

A comparative surface area may be measured by a typical BET method.

Observation of porosity

With regard to a porosity of the positive electrode active material layer **41b, 41c** of the positive electrode **41** or the like or at a porosity of the negative electrode active material layer **42b, 42c** of the negative electrode **42** or the like, a determination can be made by multiplying a reciprocal of a true density of each component in each constituent particle weight or binder weight included in the active material layer on a current collector formed per unit area, dividing the value thereof by a volume of the active material layer on a current collector formed per unit area, and subtracting the value thereof from 1.

Requirements for relational expression R resulting from analysis

An abundance ratio $R_E$, an abundance ratio $R_C$, and an abundance ratio $R_A$ that relate to the relational expression $R$ can each be derived from the below-mentioned equation by preparing the battery **1** that is configured by using various additive amounts $Q$ of the additive, observing the amount of presence $W_E$ of the additive component in the electrolyte, the amount of presence $W_C$ of the additive component in the positive electrode **41,** and the amount of presence $W_A$ of the additive component in the negative electrode **42** after charging/discharging in each battery **1,** and determining the total amount of $W_E$, $W_C$, and $W_A$ **as** (total) $W_T$.

$$R_E = (W_E/ W_T) \times 100$$

$$R_C = (W_C/ W_T) \times 100$$

$$R_A = (W_A/ W_T) \times 100$$

Accordingly, so long as the battery **1** satisfies the relational expression $R$ defined by $R_E$, $R_C$, and $R_A$, the relationship regarding an amount of presence $W_E$ < an amount of presence $W_C$ and the relationship regarding an amount of presence $W_C$ < an amount of presence $W_A$ are maintained, and superior properties such as those mentioned hereinafter (*e.g.,* an electrical property and a battery life property) may be obtained.

EXAMPLES

A battery for analysis was prepared by using 3% carbon-type conducting agent added to an active material composite containing a spinel-type lithium-manganese complex oxide and a lithium-nickel-type complex oxide as the positive electrode, using a carbon-type negative electrode as the negative electrode to form opposing electrodes separated via a polyolefin-type micrporous membrane as a separator, and immersing the opposing electrodes separated via the separator in an nonaqueous electrolyte solution comprising a cyclic disulfonic ester as an additive. The employed covering or method was as described above. The average active material specific surface area $Sc_{AVE}$ of the active material composite of the positive electrode was 0.53 m$^2$/g. An active material surface area ratio **Ac/Aa** was 1.44 and a porosity ratio (positive/negative) was 0.76.

The measurements of the additive component contained in the electrolyte, the additive component contained in the positive electrode, and the additive component contained in the negative electrode were conducted according to the above-described technique via the below-described device. The amount of presence $W_E$ of the additive component contained in the electrolyte was calculated by quantifying sulfur using inductively coupled plasma atomic emission spectrophotometry (inductively coupled plasma atomic emission spectrophotometry device: Ultima 2C, manufactured by HORIBA, Ltd.), and the amount of presence $W_C$ of the additive component contained in the positive electrode **41** and the amount of presence $W_A$ of the additive component contained in the negative electrode **42** were calculated by quantifying sulfur using an ion chromatography (device requirements: AQF-100, manufactured by Dia Instruments Co., Ltd. and ICS-3000, manufactured by Dionex Corporation; maximum temperature of combustion at 1100°C).

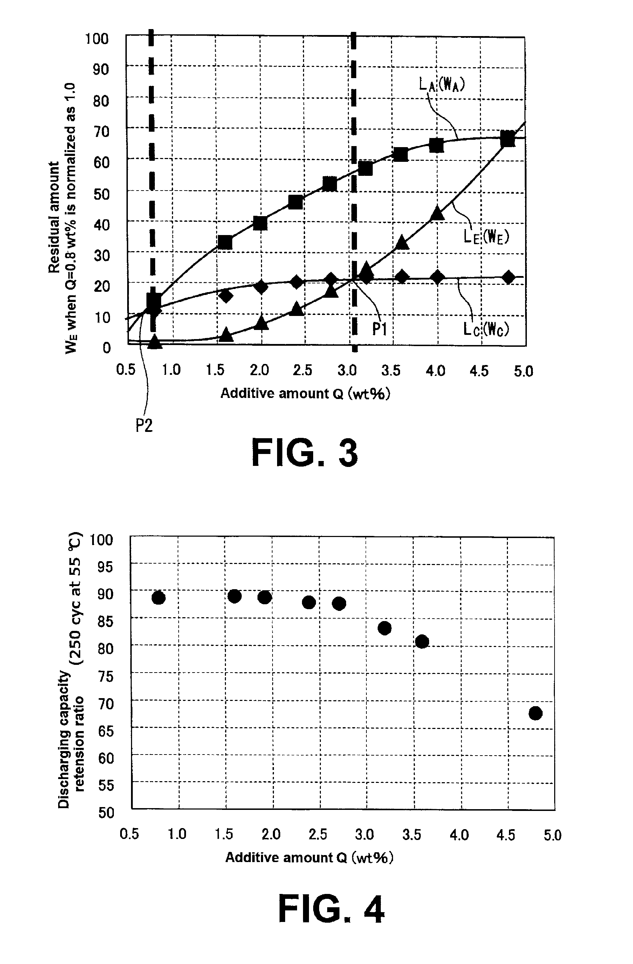

Curved lines $L_E$, $L_C$, and $L_A$ of FIG. 3 are characteristic curves obtained by conducting various analysis of the battery **1** after charging/discharging. The curved lines $L_E$, $L_C$, and $L_A$ of FIG. 3 indicate a variation property for the amount of presence $W_E$, the amount of presence $W_C$, and the amount of presence $W_A$ with respect to each additive (variation properties normalized based on the amount of presence $W_E$ being set to 1.0 at a time the additive amount $Q$ was 0.8 wt%). As shown in FIG. 3, the curved line $L_C$, *e.g.,* in a range of approximately 0.8 to 3.1 wt%, which was brought about by an increase in the additive amount $Q$, was interpreted as starting to settle into a saturated state after rising along a relatively gradual slope to a value higher than that of curved line $L_E$. The curved line $L_A$ was interpreted as being maintained at an even higher value than that of the curved lines $L_E$ and $L_C$, and rising along a relatively steep slope with respect to an increase in the additive amount $Q$. While a period of rise for the curved line $L_C$ was maintained at a relatively low value with respect the curved line $L_E$, the curved line $L_C$ gradually began to rise when approaching a saturated state, and an intersection with the curved line $L_C$ was seen at a predetermined additive amount $Q$ (additive amount $Q \approx 3.1$ wt% in FIG. 3), *i.e.,* an intersection at intersection point **P1** in FIG. 3.

Next, in the curved line $L_C$ along a larger quantity range than that where an additive $Q$ intersects intersection point **P1** (additive amount $Q$ exceeds 3.1 wt% in FIG. 3), it was obvious that a saturated state was maintained without change in a curved line $L_C$ even in cases where the additive amount $Q$ was increased. It was obvious that the curved line $L_A$ formed a slope that gradually rose with respect to an increase in the additive amount $Q$, and started to settle into a saturated state. The curved line $L_E$ rose along a high gradient as the curved line $L_A$ approached a saturated state.

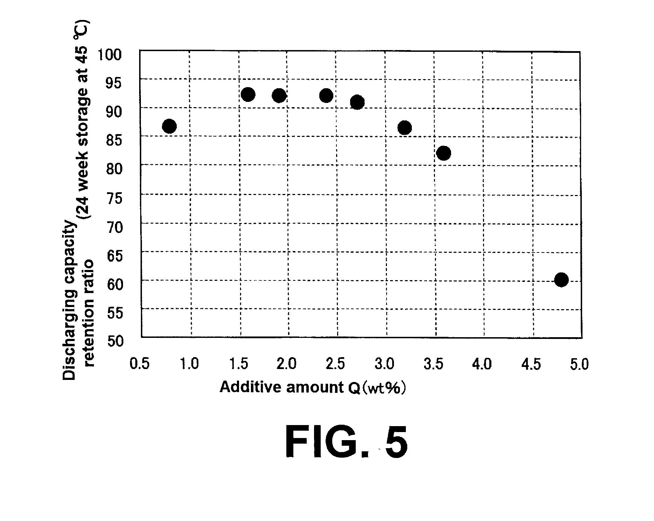

FIG. 4 and FIG. 5 are diagrams showing a discharging capacity retention ratio property with respect to the additive amount $Q$ (property diagrams based on a relative value of 100 for an initial capacity), which were obtained via a high temperature cycle test (temperature: 55°C; 250 cycles) and a high temperature storage test (temperature: 45°C; storage time: 24 hours) of each battery **1** used in FIG. 3. According to FIG. 4 and FIG. 5, the discharging capacity retention ratio property decreased as the additive amount $Q$ was increased to exceed a predetermined value (value corresponding to intersection point **P1** at 3.2 wt% in FIG. 4 and FIG 5).

Although the details are unclear, the below-mentioned mechanism was thought to be relevant. The amount of presence $W_C$ in the positive electrode **41** varied in response an additive adsorbed by an adsorption phenomenon. The amount of presence $W_C$ in the positive electrode **41** was thought to be readily present in the saturated state when compared to the amount of presence $W_A$, which varied in response to a coating amount of a coating formed by an electrochemical reaction of the negative electrode **42.** In a case where the additive amount $Q$ was increased to an amount greater than that at the intersection point **P1,** the amount of presence $W_C$ in the positive electrode **42** was considered saturated. Thus, an increment in the additive amount $Q$ was reflected in the amount of presence $W_E$ in the electrolyte and the amount of presence $W_A$ in the negative electrode **41,** the amount of presence $W_A$ in the negative electrode **42** approached saturation, and the amount of presence $W_E$ in the electrolyte rapidly increased. Accordingly, it was thought that the above brought about a reduction in discharge capacity in a high temperature charge/discharge cycle test or a high temperature storage test. It was thought that the amount of moveable lithium ions was reduced by gas generation or elevated resistance via excessive decomposition of the additive present in the electrolyte.

Subsequently, in a case where the additive amount $Q$ exceeded an intersection point **P1,** the amount of presence $W_E$ in the electrolyte increased abruptly such that there were cases where a battery life property deteriorated, *e.g.,* a discharge capacity resulting from high temperature cycles or high temperature storage was lowered. However, an abrupt increase in the amount of presence $W_E$ was inhibited by setting the additive amount $Q$ (*e.g.,* setting the additive amount $Q$ at less than 3.1 wt% as shown in FIG. 3) such that the additive amount $Q$ was less than the intersection point **P1,** *i.e.,* being able to maintain a relationship where an amount of presence $W_E$ < an amount of presence $W_C$, so that the desired battery life property was easily obtained.

A relationship in which the amount of presence $W_C$ < the amount of presence $W_A$ was barely maintained at the relatively small amount of the additive amount $Q$ in FIG. 3, *e.g.,* the additive amount $Q$ in FIG. 3 that was 0.8 wt%. In a case where the relationship in which the amount of presence $W_C$ < the amount of presence $W_A$ was maintained, it was obvious that a volume expansion of the battery **1** was sufficiently inhibited (as shown in Table 1) after a percentage of volume change (percentage of change before and after initial charging) of the battery was tested with respect the additive amount $Q$.

Table 1

| Rate of volume change (Volume multiplication factor) | Additive amount $Q$ (wt%) | | | | | | | |
|---|---|---|---|---|---|---|---|---|
| | 0 | 0.8 | 1.6 | 2.0 | 2.4 | 2.8 | 3.2 | 3.6 |
| | 1.39 | 1.19 | 1.14 | 1.12 | 1.08 | 1.07 | 1.05 | 1.04 |

On the other hand, in a case where the additive amount $Q$ was less than 0.8 wt% such as that shown in FIG. 3, it was understood based on the figure that the relationship in which the amount of presence $W_C$ < the amount of presence $W_A$ was not maintained. As a battery performance under the above conditions, even in a case where a relatively large volume expansion occurred in the battery **1** as seen in Table 1 *e.g.,* the additive amount was 0, or the additive amount $Q$ was not 0 as seen in FIG. 5, it was understood that a high temperature storage discharging capacity retention ratio was reduced over a region of less than 0.8 wt%. While the details are unclear with regard to a mechanism of such a correlation, the additive required in a protective coating formation of the negative electrode was adsorbed to the positive electrode. As a result, it is thought that a negative electrode protective function was insufficient, and thus gas production during initial charging/discharging was increased.

While the details are unclear, it is thought that a reason that the relationship between the amount of presence $W_C$ and the amount of presence $W_A$ reversed at a time where the additive amount $Q$ was small was as follows. The additive that is present in the electrolyte in a large quantity was adsorbed on the active material surface of the micropores in the positive electrode and the negative electrode in a case where the additive amount $Q$ was small. Accordingly, the additive that contributed to a coating formation by reduction on the electrode surface as a result of the discharging/charging thereafter was already very small. In a case where the active material surface area ratio (positive electrode/negative electrode) was at least 1, the additive amount adsorbed on the positive electrode active material surface that was larger than the surface area was relatively large as compared to the negative electrode, and a coating amount deposited by reduction formation resulting from the charging/discharging on the negative electrode surface appeared to be insufficient due to the small amount of the additive in the electrolyte. Accordingly, it was thought that the amount of presence $W_C$ > the amount of presence $W_A$, since the positive electrode active material surface adsorption amount was not exceeded.

As previously described, in a case where the active material surface area ratio (positive electrode/negative electrode) was at least 1, an intersection point (**P2**) in a property diagram of FIG. 3 indicated a reversed relationship between the amount of presence $W_C$ and the amount of presence $W_A$. Because the coating formation on the negative electrode was insufficient in an area of the additive amount $Q$ on the left side (low value side of $Q$) of the intersection point **P2,** it was thought that a large amount of gas was generated, the volume of the battery was increased, and the battery life property, *e.g.,* the high temperature storage discharging capacity retention ratio, was specifically deteriorated. The area was thought to broaden as a value of the active material surface area ratio (positive electrode/negative electrode) increased.

Accordingly, having an active material surface area ratio (positive electrode/negative electrode) of at least 1 is not always feasible with respect to the convenience of material design. For example, the surface area of the micropores of the positive electrode must be large, in order to attain a high input/output property in the positive electrode. In addition, an active material may be selected that has a large particle diameter and a small specific surface area as the material of the negative electrode, in order to attain a decrease in gas generated at a time of initial charging, high temperature charging/discharging cycles, or high temperature storage. An active material surface area ratio (positive electrode/negative electrode) of at least 1, which has a small denominator and a large numerator, may not be feasible under the above conditions.

It is understood that an intersection point reversing a relationship between the amount of presence $W_C$ and the amount of presence $W_A$ **in** system where an active material surface area ratio (positive electrode/negative electrode) was 1 or more may be a lower limit of the additive amount $Q$.

As previously mentioned, the following have been determined from the results shown in FIGS. 3 to 5 and Table 1. First, it was understood that so long as the additive amount $Q$ was equal to or greater than a intersection point reversing a relationship between the amount of presence $W_C$ and the amount of presence $W_A$, the coating amount of the coating formed by an electrochemical reaction of the negative electrode **42** was sufficient, the volume expansion of the battery 1 by generation of a reactive gas (reactive gas resulting from reductive decomposition of the electrolyte) was able to be sufficiently inhibited, and a superior value was able to be obtained for a high temperature storage discharging capacity retention ratio. On the other hand, in a case where the additive amount $Q$ exceeded an intersection point **P1** where a relationship between the amount of presence $W_{C*}$ and the amount of presence $W_A$ reversed, it was understood that the amount of the presence $W_E$ in the electrolyte increased abruptly such that there were cases where a battery life property deteriorated, *e.g.,* there were cases where a discharge capacity resulting from high temperature cycles or high temperature storage was lowered.

It was thought that a position of the intersection point **P1, P2,** *i.e.,* a range of the additive amount $Q$ that satisfied a relational expression **R,** changed as a result of a physical property of the electrolyte, the positive electrode, or the negative electrode such as a material, a specific surface area, or the like. Subsequently, even in a case where a material system differs from that exemplified in the present specification, a technical concept of the present description may be similarly applied such that a range of an additive amount can be defined by the relational expression **R** based on an adsorption amount of an additive component to the positive electrode or the size relationship thereof, or an amount of coating formation on the negative electrode as a result of charging or an interaction with a saturation property or the like thereof.

Additional definitions

The results shown in Table 2 were obtained after testing a variation property of the discharging capacity maintenance factor with respect to the additive amount $Q,$ using different settings for an active material surface area ratio **Ac/Aa** (positive electrode/negative electrode) in the battery 1 employed in FIGS. 3 to 5.

Table 2

| Additive amount **Q** | Active material surface area ratio | Amount of presence (relative value when $W_T$= 100) | | | Discharging capacity retention ratio |
|---|---|---|---|---|---|
| | (Ac/Aa) | $W_E$ | $W_C$ | $W_A$ | |
| 0.8 wt% | 1.92 | 3% | 47% | 50% | 73.8% |
| | 1.44 | 4% | 43% | 53% | 86.2% |
| | 1.25 | 4% | 42% | 54% | 88.6% |

| Additive amount **Q** | Active material surface area ratio | Amount of presence (relative value when $W_T$= 100) | | | Discharging capacity retention ratio |
|---|---|---|---|---|---|
| | (Ac/Aa) | $W_E$ | $W_C$ | $W_A$ | |
| 1.6 wt% | 1.92 | 6% | 35% | 59% | 74.8% |
| | 1.44 | 7% | 31% | 62% | 87.4% |
| | 1.25 | 7% | 30% | 63% | 89.8% |

| Additive amount **Q** | Active material surface area ratio | Amount of presence (relative value when $W_T$= 100) | | | Discharging capacity retention ratio |
|---|---|---|---|---|---|
| | (Ac/Aa) | $W_E$ | $W_C$ | $W_A$ | |
| 2.4 wt% | 1.92 | 14% | 31% | 55% | 73.1% |
| | 1.44 | 15% | 27% | 58% | 85.4% |
| | 1.25 | 15% | 26% | 59% | 87.7% |

| Additive amount **Q** | Active material surface area ratio | Amount of presence (relative value when $W_T$= 100) | | | Discharging capacity retention ratio |
|---|---|---|---|---|---|
| | (Ac/Aa) | $W_E$ | $W_C$ | $W_A$ | |
| 3.2 wt% | 1.92 | 23% | 26% | 51% | 69.3% |
| | 1.44 | 24% | 22% | 54% | 81.0% |
| | 1.25 | 24% | 21% | 55% | 83.2% |

| Additive amount **Q** | Active material surface area ratio | Amount of presence (relative value when $W_T$= 100) | | | Discharging capacity retention ratio |
|---|---|---|---|---|---|
| | (Ac/Aa) | $W_E$ | $W_C$ | $W_A$ | |
| 3.6 wt% | 1.92 | 27% | 24% | 49% | 67.2% |
| | 1.44 | 28% | 20% | 52% | 78.5% |
| | 1.25 | 29% | 19% | 52% | 80.7% |

It was understood that a large difference existed in each property in a case where the active material surface area ratio **Ac/Aa** was 1.92 and the active material surface area ratio **Ac/Aa** was 1.44 (in a case where an average specific surface area of the positive electrode was 0.53 $m^2$/g) or less (1.25), based on the results indicated in Table 2. Accordingly, it is understood that a battery having a sufficiently superior life property (discharging capacity retention ratio) is obtained by setting the active material surface area ratio **Ac/Aa** to a smaller value, *e.g.,* a setting equal to or less than 1.8, without being defined by the relational expression **R** alone. A reduction in an active material surface area ratio **Ac/Aa** (equal to or less than 1.8) is achieved by, *e.g.,* a reduction in an average specific surface area $Sc_{AVE}$ of the positive electrode active layer that is formed on the positive electrode **41** (*e.g.,* setting an average specific surface area to 0.60 m²/g or less).

Accordingly, the additive contained in the electrolyte before charging/discharging by appropriately setting the average specific surface area $Sc_{AVE}$ of the positive electrode **41** or the average specific surface area $Sa_{AVE}$ of the negative electrode **42** is able to be induced such that the coating is effectively formed on the surface of the negative electrode **42,** the residual amount **of $W_E$** in the electrolyte after charging/discharging is able to be reduced, and the coating amount of the coating in the negative electrode **42** is able to be sufficiently increased, which readily contributed to an improvement in a property of the battery **1.**

The active material surface area ratio **Ac/Aa** was a value calculated from the only specific surface area of the active material. However, in a case where a carbon-type conducting agent is added to the positive electrode, the conducting agent has a larger specific surface area and the conducting agent includes the adsorption action of the additive. Accordingly, the amount of the conducting agent is preferably reduced within a range where a property of the positive electrode **41** is uncompromised (*e.g.,* setting to 0.1 to 3 wt%).

The appropriate selection of each porosity may be exemplified in the positive electrode material layer **41b, 41c** of the positive electrode **41** or the negative electrode material layer **42b, 42c** of the negative electrode **42.** For example, it is preferable in order to easily satisfy the relational expression **R,** that the electrolyte amount present in the proximity of the active material particles is defined by a relationship of the positive electrode **41** < the negative electrode **42,** resulting from the porosity of the positive electrode material layer **41b, 41c** being smaller than the porosity of the negative electrode material layer **42b, 42c.**

As previously mentioned, the additive contained in the electrolyte before charging/discharging is able to be induced such that the coating is effectively formed on the surface of the negative electrode **42,** the residual amount of $W_E$ in the electrolyte after charging/discharging is able to be reduced, and the coating amount of the coating in the negative electrode **42** is able to be sufficiently increased, which readily contributed to an improvement in a property of the battery **1,** even as a result of setting a positive electrode surface area relationship or an active material specific surface area, setting a conducting agent amount, or setting a porosity. The desirable value (as indicated in the present description) may likewise be applicable even in cases where using another material, so long as that material is composed of a lithium ion battery type.

REFERENCE SIGNS LIST

    **1** Battery;
    **2, 3** Terminal;
    **4** Power generating element;
    **41** Positive electrode;
    **42** Negative electrode;
    **43** Separator; and
    **5** Covering.

CITATION LIST

Patent Literature

    Patent Literature 1: JP-A 2000-123868; and
    Patent Literature 2: JP-A 2006-004811.

**Claims**

1. A nonaqueous electrolyte secondary battery, subjected to a charging/discharging including at least an initial charging, storing a power generating element formed by laminating a positive electrode and a negative electrode separated by a separator, a nonaqueous electrolyte and an additive within a covering that is sealed with a terminal led outwardly, the nonaqueous electrolyte secondary battery comprising:

    a relational expression $R_E < R_C < R_A$ defined by using a total amount of presence $W_E$ of the additive component in the electrolyte, an amount of presence $W_C$ of the additive component in the positive electrode, and an amount of presence $W_A$ of the additive component in the negative electrode after the charging/discharging as $W_T$, and by using an abundance ratio of $W_E$ with respect to $W_T$ as $R_E$, an abundance ratio of $W_C$ with respect to $W_T$ as $R_C$, and an abundance ratio of $W_A$ with respect to $W_T$ as $R_A$.

2. The nonaqueous electrolyte secondary battery according to claim 1, wherein a ratio of a surface area of a positive electrode active material layer formed on the positive electrode with respect to a surface area of a negative electrode active material layer formed on the negative electrode is 1.8 or less.

3. The nonaqueous electrolyte secondary battery according to claim 1, wherein an average specific surface area of the positive electrode active material layer is 0.60 m$^2$/g or less.

4. The nonaqueous electrolyte secondary battery according to claims 1 to 3, wherein a conducting agent contained in the positive electrode active material layer is 3 wt% or less.

5. The nonaqueous electrolyte secondary battery according to claims 1 to 4, wherein a porosity of the positive electrode active material layer is less than a porosity of the negative electrode active material layer.

# FIG. 1

**FIG. 2**

**FIG. 3**

**FIG. 4**

FIG. 5

Europäisches
Patentamt

European
Patent Office

Office européen
des brevets

# EUROPEAN SEARCH REPORT

Application Number

EP 14 18 8144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/200886 A1 (DEGUCHI MASAKI [JP]) 18 August 2011 (2011-08-18) * paragraphs [0014], [0019] - [0033] * * examples 1, 6-8 * * table 1 * * abstract * | 1-5 | INV. H01M4/131 H01M10/04 H01M10/0525 H01M10/0567 H01M10/42 |
| X | US 2013/122353 A1 (KAWASAKI DAISUKE [JP] ET AL) 16 May 2013 (2013-05-16) * paragraphs [0025] - [0027] * * table 1 * * abstract * | 1 | ADD. H01M4/02 H01M10/44 |
| X | US 2003/118914 A1 (MORI SUMIO [JP]) 26 June 2003 (2003-06-26) * paragraph [0020] * * table 1 * * abstract * | 1 | |
| X | JP 2002 329528 A (MITSUI CHEMICALS INC) 15 November 2002 (2002-11-15) * paragraphs [0044], [0094] * * abstract * | 1 | |
| X | JP 4 537851 B ((TOKE  ) TOSHIBA KK) 8 September 2010 (2010-09-08) * paragraphs [0009], [0015], [0065], [0101], [0112] * | 1 | |

TECHNICAL FIELDS
SEARCHED      (IPC)

H01M

The present search report has been drawn up for all claims

| Place of search | Date of completion of the search | Examiner |
|---|---|---|
| The Hague | 19 January 2015 | Mercedes González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 18 8144

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2015

| Patent document cited in search report | | Publication date | Patent family member(s) | | Publication date |
|---|---|---|---|---|---|
| US 2011200886 | A1 | 18-08-2011 | CN | 102187511 A | 14-09-2011 |
| | | | KR | 20110079707 A | 07-07-2011 |
| | | | US | 2011200886 A1 | 18-08-2011 |
| | | | WO | 2011039949 A1 | 07-04-2011 |
| US 2013122353 | A1 | 16-05-2013 | US | 2013122353 A1 | 16-05-2013 |
| | | | WO | 2012029578 A1 | 08-03-2012 |
| US 2003118914 | A1 | 26-06-2003 | CN | 1417881 A | 14-05-2003 |
| | | | JP | 3797197 B2 | 12-07-2006 |
| | | | JP | 2003142152 A | 16-05-2003 |
| | | | US | 2003118914 A1 | 26-06-2003 |
| JP 2002329528 | A | 15-11-2002 | JP | 4190162 B2 | 03-12-2008 |
| | | | JP | 2002329528 A | 15-11-2002 |
| JP 4537851 | B | 08-09-2010 | --------------------------------------------- | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000123868 A

• JP 2006004811 A